# EUROPEAN PATENT APPLICATION

(11) **EP 4 803 493 A1**
(43) Date of publication of application: **09.09.2026**
(21) Application number: 25893274.8
(22) Date of filing: 10.12.2025
(51) Int. Cl.: C03B 23/03, C03B 23/023

(54) **ARC-SHAPED MICROCRYSTALLINE GLASS PLATE, AND PREPARATION METHOD THEREFOR AND USE THEREOF**

(30) Priority: 21.03.2025 CN 202510339676
(71) Applicant: Wenzhou Kanger Crystallite Utensils Co., Ltd., Wenzhou, Zhejiang 325802 (CN)
(72) Inventor: The designation of the inventor has not yet been filed
(74) Representative: v. Bezold & Partner Patentanwälte - PartG mbB
(86) International application number: PCT/CN2025/141414
(87) International publication number: WO 2026/152948

(57) **Abstract**

The present invention relates to the technical field of a curved glass-ceramic panel, and in particular, to a curved glass-ceramic plate, a preparation method therefore and use thereof. The roughness of both inner and outer surfaces of the curved glass-ceramic plate is ≤ 0.06 µm; the radial unevenness A of the curved glass-ceramic plate is ≤ 0.4%, and A = h/L × 100%; and the axial unevenness B of the curved glass-ceramic plate is ≤ 0.4%, and B = d/L × 100%. The curved glass-ceramic plate provided by the present invention has a smooth and flat surface, can avoid optical scattering and meet visibility requirements, and has good evenness, low radial unevenness and axial unevenness, no "corner warping" phenomenon and no obvious visual distortion.

## Description

### CROSS-REFERENCE TO THE RELATED APPLICATIONS

The present invention claims priority to Chinese Patent Application No. 202510339676.1, filed with the China National Intellectual Property Administration on March 21, 2025, and entitled "CURVED GLASS-CERAMIC PLATE, PREPARATION METHOD THEREFORE AND USE THEREOF", the contents of which are incorporated herein by reference in entirety.

### TECHNICAL FIELD

The present invention relates to the technical field of curved glass-ceramic panels, and in particular, to a curved glass-ceramic plate, a preparation method therefore and use thereof.

### BACKGROUND

The main crystal phase of LAS glass-ceramic (hereinafter referred to as glass-ceramic) is of a Li₂O-Al₂O₃-SiO₂ system. With characteristics such as low expansion, high strength and adjustable light transmittance, it is widely used in various heating fields, especially in scenarios such as cooktops, kitchen appliance covers and the like, which are the main application fields of glass-ceramic. The mainstream preparation technology of glass-ceramic is the molten glass rolling forming method for preparing flat glass-ceramic. Glass-ceramic can be classified into colored glass-ceramic, transparent glass-ceramic and white glass-ceramic according to its body color property. Among others, a 4 mm-thick glass-ceramic panel prepared from transparent glass-ceramic has a visible light transmittance of more than 70%, and features low expansion, high strength, good chemical stability and the like, making it an ideal material for high-temperature observation windows, fireplaces and the like. Limited by the rolling forming production process, early fireplace designs were mainly square to adapt to flat glass-ceramic panels. With the emergence of cylindrical fireplace designs, which are novel and unique in appearance, the manufacture of curved glass-ceramic plates matched therewith becomes particularly critical. To enhance visibility, curved glass-ceramic panels are often required to have smooth and even double surfaces, i.e., a roughness Ra ≤ 0.06 µm, so as to avoid optical scattering. In addition, curved glass-ceramic panels are generally mounted in specific metal frames in practical applications, and have strict requirements on dimensional tolerances and evenness.

The production process of curved glass-ceramic panels in the prior art is generally gravity forming. Specifically, a concave mold is first prepared, a flat base glass (base glass refers to an uncrystallized glass-ceramic panel) is horizontally placed in the concave mold, heated to a softening temperature and held. Under the action of gravity, the base glass plate deforms until it conforms to the mold, achieving the effect of curved forming. Subsequently, the temperature is further increased to crystallize inside the curved plate, obtaining a curved glass-ceramic. Such process is particularly suitable for small curved glass-ceramic panels with a small central angle. The mold is a key device of the gravity forming method. The dimensions of the curved glass-ceramic, such as inner radius and tolerances, are directly determined by the mold.

In actual production, heat-resistant iron-based alloys are mainly selected for mold materials. However, metallic materials inherently have a high coefficient of thermal expansion, and are prone to torsional deformation after repeated thermal cycles, resulting in the same torsional deformation of the curved glass-ceramic panel conformed to the inner wall thereof, and a prominent "corner warping" phenomenon when inverted. For example, when an iron-based mold is used to prepare a curved glass-ceramic plate with an inner radius R (the iron-based mold is curved, and R refers to the inner radius of the curve) of 260 mm, a central angle of 60° and a length of 300 mm, the radial unevenness is as high as 1.67%. Herein, the radial unevenness A = h/L × 100%; when the curved glass-ceramic plate is placed on a horizontal plane with its opening facing downward, three vertices of the curved glass-ceramic plate are in contact with the horizontal plane, and the distance from the other vertex to the horizontal plane is h; and L is the length of the curved glass-ceramic plate in the axial direction. That is, for a 300 mm-long curved glass-ceramic plate, the height from the remaining vertex to the horizontal plane when inverted can reach 5 mm, which completely fails to meet the assembly requirements of fireplace observation windows.

In addition, for a curved glass-ceramic plate with a central angle > 114°, when the length of the glass-ceramic precursor plate thereof exceeds 2R (R is the curved inner radius of the concave mold), it cannot be simply prepared by a concave mold.

In a related-art forming device, aiming at the case where the length dimension of the glass-ceramic precursor plate exceeds that of the concave mold, cylindrical rotating rollers are arranged at the top ends of the left and right sides of the concave mold to help the flat glass-ceramic precursor plate continuously descend and be formed under the action of gravity. In the softening stage, the base glass at the center softens and sinks, continuously driving the base glass on the support bars on both sides of the concave mold to move toward the concave mold, and finally forming an overall curved shape falling into the concave mold. However, the structure of this device is obviously complex. At a high temperature of 800-900°C, it is obviously difficult to easily solve the problems such as fixation of the rotating rollers and maintaining horizontality during rotation. Moreover, the glass-ceramic precursor plate is always in contact with the support bars and the rotating rollers and has relative movement during the softening process, which is prone to forming scratches on the surface of the glass-ceramic precursor plate. These scratches need to be removed by an additional polishing process, but polishing of curved glass is much more complex than that of flat glass. In addition, the inherent small-batch and multi-specification characteristics of curved glass products make the process route of forming first and then polishing extremely uneconomical. Furthermore, this solution is difficult to overcome the problem of torsion of the glass-ceramic precursor plate during softening. Various disturbances in the production process are very likely to cause small-angle rotation of the glass-ceramic precursor plate when descending, resulting in high radial unevenness. Therefore, it is necessary to add a cutting process to cut the curved plate prepared by the above method so that the four vertices are on a same horizontal plane.

Furthermore, neither the related art nor the prior art applications mention the axial evenness B, where B = d/L × 100%, L is the length of the curved glass-ceramic plate in the axial direction; and when the curved glass-ceramic plate is placed on a horizontal plane with its opening facing downward, the maximum distance between the curved arc formed by downward bending of the top end of the curved glass-ceramic plate and the connecting line of the midpoints of the two curved edges of the curved glass-ceramic plate is d. In fact, the glass-ceramic precursor plate is very prone to inward arching in the axial direction during crystallization. Although this deformation does not affect the assembly of the curved glass-ceramic panel in applications such as fireplaces, there is obvious visual distortion near the curved edge, so the axial evenness B also needs to be controlled at a low level.

To achieve a smooth and distortion-free surface and excellent evenness of the curved glass-ceramic panel suitable for tooling, conventional preparation methods often require complicated subsequent processing procedures to further polish or cut the formed curved glass-ceramic to the designed dimensions.

In view of this, the present invention is proposed.

### SUMMARY

A first objective of the present invention is to provide a curved glass-ceramic plate, which has a smooth and even surface, and a roughness Ra of both inner and outer surfaces ≤ 0.06 µm, can avoid optical scattering and meet visibility requirements, and has good evenness, low radial unevenness and axial unevenness, no "corner warping" phenomenon, and no obvious visual distortion at the curved edges. It solves the problem that the curved glass-ceramic panels in the prior art are difficult to meet the requirements of double-sided roughness ≤ 0.06 µm and poor radial evenness and axial evenness.

A second objective of the present invention is to provide a method for preparing a curved glass-ceramic plate, which adopts steps of polishing first and then forming and crystallization, can be formed in one step, directly obtains the required curved glass-ceramic panel with a smooth, even surface and excellent evenness, and does not require subsequent mechanical processing such as polishing, trimming and chamfering of the curved panel.

A third objective of the present invention is to provide use of the curved glass-ceramic plate in the fields of construction and decoration.

To achieve the above objectives of the present invention, the following technical solutions are specifically adopted:

The present invention first provides a curved glass-ceramic plate, wherein the roughness of the inner surface of the curved glass-ceramic plate is ≤ 0.06 µm, and the roughness of the outer surface of the curved glass-ceramic plate is ≤ 0.06 µm;
the curved glass-ceramic plate is curved in shape;
the radial unevenness A of the curved glass-ceramic plate is ≤ 0.4%, wherein A = h/L × 100%; when the curved glass-ceramic plate is placed on a horizontal plane with its opening facing downward, three vertices of the curved glass-ceramic plate are in contact with the horizontal plane, and the distance from the other vertex to the horizontal plane is h; L is the length of the curved glass-ceramic plate in the axial direction; and h and L have the same unit; and
the axial unevenness B of the curved glass-ceramic plate is ≤ 0.4%, wherein B = d/L × 100%; when the curved glass-ceramic plate is placed on a horizontal plane with its opening facing downward, in the axial direction of the curved glass-ceramic plate, the top end of the curved glass-ceramic plate bends downward to form a curved arc, and the maximum distance from the curved arc to the connecting line of the midpoints of the two curved edges of the curved glass-ceramic plate is d; L is the length of the curved glass-ceramic plate in the axial direction; and d and L have the same unit.

Further, the coefficient of thermal expansion of the curved glass-ceramic plate at 40-700°C is < 0.5 ppm/°C.

The present invention further provides a method for preparing the curved glass-ceramic plate, including the following steps:
obtaining a double-sided polished flat glass-ceramic precursor plate; and
placing the double-sided polished flat glass-ceramic precursor plate on a refractory mold, and then performing heat treatment for forming and crystallization to obtain the curved glass-ceramic plate.

Further, the vertices of the double-sided polished flat glass-ceramic precursor plate are chamfered and/or rounded, and four edges of the double-sided polished flat glass-ceramic precursor plate are chamfered and/or rounded.

Further, the material of the flat glass-ceramic precursor plate includes LAS glass-ceramic.

Further, the refractory material in the refractory mold includes at least one of zirconium refractory material, corundum refractory material, magnesia refractory material, calcium-magnesia refractory material and siliceous refractory material.

Further, the thickness of the refractory mold is ≤ 15 mm.

Further, the roughness of the inner surface of the refractory mold is 0.05-4.00 µm.

Further, the central angle of the curved glass-ceramic plate is > 114°.

Further, the refractory mold is curved in shape; two edges of the refractory mold in the its axial direction are respectively connected with auxiliary side edges, the auxiliary side edges are flat in shape, the refractory mold is fixedly or detachably connected with the two auxiliary side edges, and when the refractory mold is placed with its opening facing upward, the included angle α between the auxiliary side edges and the horizontal plane satisfies: α > (21750-2490000/θ)^{1/2}, wherein θ is the central angle of the curved glass-ceramic plate in degrees.

The present invention also provides use of the curved glass-ceramic plate in the fields of construction and decoration.

Compared with the prior art, the beneficial effects of the present invention are as follows.
(1) The curved glass-ceramic plate provided by the present invention has a smooth and even surface with good evenness.
(2) The curved glass-ceramic plate provided by the present invention has no scratches on the surface.
(3) The curved glass-ceramic plate provided by the present invention has a central angle > 114° and a low coefficient of thermal expansion.
(4) The method for preparing the curved glass-ceramic plate provided by the present invention adopts polishing first and then forming and crystallization, and can prepare a low-expansion curved glass-ceramic plate having a smooth, even surface with good evenness.
(5) The method for preparing the curved glass-ceramic plate provided by the present invention adopts polishing first and then forming and crystallization, which has high production efficiency and high yield. In addition, by adopting the polishing first method, industrial polishing is performed on the flat plate, the polishing quality is high, the polishing efficiency is also high, the plate surface is basically not broken during polishing, and the plate loss is small.
(6) In the method for preparing the curved glass-ceramic plate provided by the present invention, a refractory material is used instead of a traditional metal alloy material to manufacture the mold, and the refractory mold can be used for a long time without deformation and can be recycled for many times.
(7) In the method for preparing the curved glass-ceramic plate provided by the present invention, curved glass-ceramic plates with a central angle > 114° can be prepared by arranging auxiliary side edges on both sides of the mold respectively.
(8) In the method for preparing the curved glass-ceramic plate provided by the present invention, the axial evenness of the curved glass-ceramic plate can be improved by controlling the thickness of the refractory mold.
(9) In the method for preparing the curved glass-ceramic plate provided by the present invention, by controlling the included angle α between the auxiliary side edges and the horizontal plane, it can be ensured that no scratches are generated on the surface of the glass-ceramic precursor plate during the falling process of the glass-ceramic precursor plate, so that the prepared curved glass-ceramic plate has no scratches on the surface.

### BRIEF DESCRIPTION OF THE DRAWINGS

To more clearly illustrate the specific embodiments of the present invention or the technical solutions in the prior art, the drawings used in the description of the specific embodiments or the prior art will be briefly introduced below. Apparently, the drawings in the following description show some embodiments of the present invention, and those skilled in the art can obtain other drawings according to these drawings without creative efforts.
FIG. 1 is a schematic structural view of a curved glass-ceramic plate provided by the present invention;
FIG. 2 is a schematic structural view of the curved glass-ceramic plate provided by the present invention when placed with its opening facing downward;
FIG. 3 is another schematic structural view of the curved glass-ceramic plate provided by the present invention when placed with its opening facing downward;
FIG. 4 is a schematic structural view of a refractory mold with auxiliary side edges provided by the present invention;
FIG. 5 is a schematic structural view of a double-sided polished flat glass-ceramic precursor plate horizontally placed on a refractory mold in Example 1 provided by the present invention;
FIG. 6 is a linear expansion coefficient curve of the curved glass-ceramic panel prepared in Example 1 provided by the present invention;
FIG. 7 is a visible light transmittance curve of the curved glass-ceramic panel prepared in Example 1 provided by the present invention.

### DETAILED DESCRIPTION OF THE EMBODIMENTS

The technical solutions of the present invention will be clearly and completely described below in combination with the drawings and specific embodiments, but those skilled in the art will understand that the embodiments described below are part of the embodiments of the present invention, not all of the embodiments, which are only used to illustrate the present invention and should not be regarded as limiting the scope of the present invention. All other embodiments obtained by those skilled in the art without creative efforts based on the embodiments of the present invention shall fall within the protection scope of the present invention. The examples without conditions specifically indicated shall be embodied in accordance with the conventional conditions or the conditions recommended by the manufacturer. The reagents or instruments used without indicating the manufacturer are conventional products commercially available.

Unless otherwise specified, in the present invention, "first aspect", "second aspect", "third aspect", "fourth aspect" and the like are only used for descriptive purposes and cannot be understood as indicating or implying relative importance or quantity, nor can they be understood as implicitly indicating the importance or quantity of the indicated technical features. Moreover, "first", "second", "third", "fourth" and the like only serve the purpose of non-exhaustive enumeration and description, and should be understood as not constituting a closed limitation on quantity.

Unless otherwise specified, the terms "comprising" and "including" mentioned in the present invention mean open-ended or closed. For example, the terms "comprising" and "including" can mean that other components not listed can also be comprised or included, or only the listed components can be comprised or included.

Unless otherwise specified, in the present invention, "one or more" or "at least one" refers to any one, any two or more than two of the listed items. Herein, "several" refers to any two or more than two.

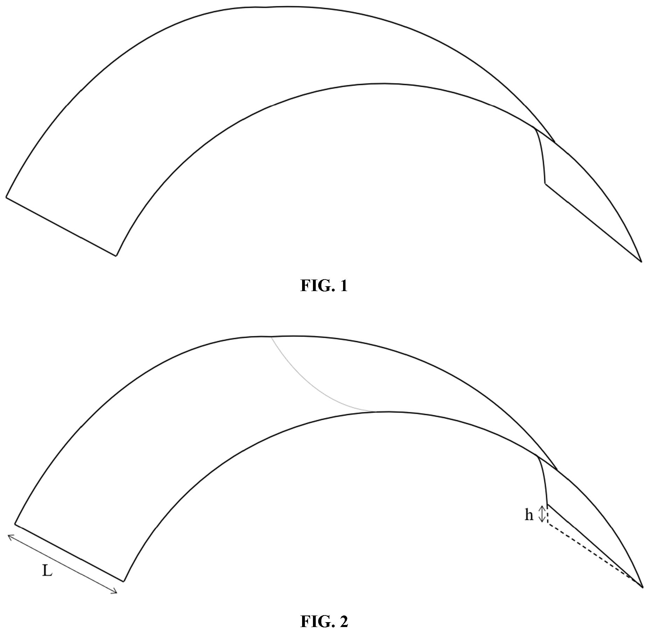

In a first aspect, with reference to FIG. 1, the present invention provides a curved glass-ceramic plate, wherein a roughness of the inner surface of the curved glass-ceramic plate is ≤ 0.06 µm and the roughness of the outer surface of the curved glass-ceramic plate is ≤ 0.06 µm;
the curved glass-ceramic plate is curved in shape;
the radial unevenness A of the curved glass-ceramic plate is ≤ 0.4%, wherein A = h/L × 100%; when the curved glass-ceramic plate is placed on a horizontal plane with its opening facing downward, three vertices of the curved glass-ceramic plate are in contact with the horizontal plane, and the distance from the other vertex to the horizontal plane is h; L is the length of the curved glass-ceramic plate in the axial direction; and h and L have the same unit; and
the axial unevenness B of the curved glass-ceramic plate is ≤ 0.4%, wherein B = d/L × 100%; when the curved glass-ceramic plate is placed on a horizontal plane with its opening facing downward, in the axial direction of the curved glass-ceramic plate, the top end of the curved glass-ceramic plate bends downward to form a curved arc, and the maximum distance from the curved arc to the connecting line of the midpoints of the two curved edges of the curved glass-ceramic plate is d; L is the length of the curved glass-ceramic plate in the axial direction; and d and L have the same unit.

In this embodiment, the roughness of the inner surface of the curved glass-ceramic plate is ≤ 0.06 µm, including but is not limited to a point value of any one of 0.05 µm, 0.04 µm, 0.03 µm, 0.02 µm and 0.01 µm, or a range value between any two of 0.05 µm, 0.04 µm, 0.03 µm, 0.02 µm and 0.01 µm.

In this embodiment, the roughness of the outer surface of the curved glass-ceramic plate is ≤ 0.06 µm, including but is not limited to a point value of any one of 0.05 µm, 0.04 µm, 0.03 µm, 0.02 µm and 0.01 µm, or a range between any two of 0.05 µm, 0.04 µm, 0.03 µm, 0.02 µm and 0.01 µm.

It can be understood that, in the curved glass-ceramic plate provided by the present invention, the roughness of the inner surface of the curved glass-ceramic plate is ≤ 0.06 µm, and the roughness of the outer surface of the curved glass-ceramic plate is ≤ 0.06 µm, i.e., both the inner and outer surfaces have a roughness ≤ 0.06 µm, making the surfaces smooth and flat, which can avoid optical scattering, and the flatness thereof is good.

In the present invention, the roughness is measured by a Mitutoyo SJ-210 in accordance with the ISO 1997 method, and λc is set to 2.5.

In this embodiment, with reference to FIG. 1, the curved glass-ceramic plate is curved or arched in shape. It can be understood that the curved glass-ceramic plate includes two curved edges and two straight edges, and the curved glass-ceramic plate includes four vertices, i.e., intersections of the curved edges and the straight edges. Optionally, the vertices can be right angles, chamfers, or rounded corners.

In this embodiment, the vertices are chamfered or rounded, i.e., the curved edges and the two straight edges are trimmed to be chamfers, or rounded corners.

In this embodiment, the radial unevenness A of the curved glass-ceramic plate is ≤ 0.4%, including but not limited to a point value of any one of 0.35%, 0.3%, 0.25%, 0.2%, 0.15%, 0.1% and 0.05%, or a range value between any two of 0.35%, 0.3%, 0.25%, 0.2%, 0.15%, 0.1% and 0.05%.

In this embodiment, A = h/L × 100%. With reference to FIG. 2, when the curved glass-ceramic plate is placed on a horizontal plane with its opening facing downward (the curved edge is n-shaped at this time), three vertices of the curved glass-ceramic plate are in contact with the horizontal plane, and the distance from the other vertex to the horizontal plane is h; and L is the length of the curved glass-ceramic plate in the axial direction. Herein, h and L have the same unit.

In this embodiment, the axial unevenness B of the curved glass-ceramic plate is ≤ 0.4%, including but not limited to a point value of any one of 0.35%, 0.3%, 0.25%, 0.2%, 0.15%, 0.1% and 0.05%, or a range value between any two of 0.35%, 0.3%, 0.25%, 0.2%, 0.15%, 0.1% and 0.05%.

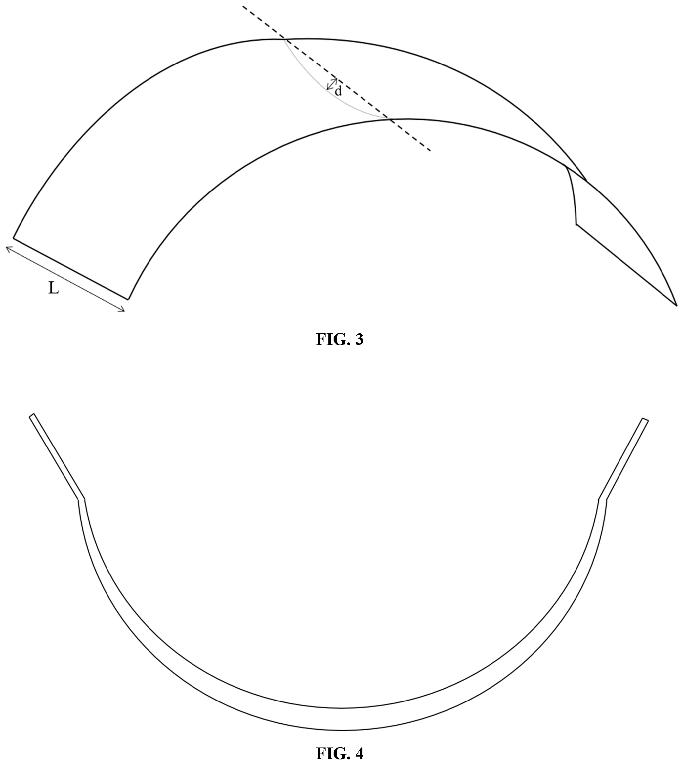

In this embodiment, B = d/L × 100%. With reference to FIG. 3, when the curved glass-ceramic plate is placed on a horizontal plane with its opening facing downward (the curved edge is n-shaped at this time), in the axial direction of the curved glass-ceramic plate, the top end of the curved glass-ceramic plate bends downward to form a curved arc (i.e., the outer side of the top end of the curved glass-ceramic plate is concave), and the maximum distance from the curved arc to the connecting line of the midpoints of the two curved edges of the curved glass-ceramic plate is d; and L is the length of the curved glass-ceramic plate in the axial direction, wherein d and L have the same unit.

In some optional embodiments, a straight line is drawn at the midpoints of the two curved edges of the curved glass-ceramic plate, or a calibrated straight metal tube is placed so that both ends of the metal tube are respectively in contact with the midpoints of the two curved edges of the curved glass-ceramic plate. Since the top end of the curved glass-ceramic plate is concave downward, there is a certain distance between the concave portion and the straight line or the metal tube, and the maximum gap between the concave portion and the straight line or the metal tube is d. This distance d can be measured by a feeler gauge in accordance with GB/T 22523. The feeler gauge is a steel sheet with a prefabricated thickness, wherein the thickness of the steel sheet is an integer multiple of 0.05 mm, such as 0.05 mm, 0.10 mm, 0.15 mm, etc.

In some optional embodiments, the coefficient of thermal expansion of the curved glass-ceramic plate at 40-700°C is < 0.5 ppm/°C. The curved glass-ceramic plate provided by the present invention has the advantage of low expansion and can withstand an instantaneous maximum temperature difference of 750°C, i.e., the curved glass-ceramic plate is placed in a muffle furnace at 780°C and kept at a constant temperature for at least 30 min, taken out and immediately put into room-temperature water to be completely immersed without breaking and with no visible cracks.

In a second aspect, the present invention provides a method for preparing the curved glass-ceramic plate, including the following steps:
S1: obtaining a double-sided polished flat glass-ceramic precursor plate.

The term "glass-ceramic precursor plate" refers to a glass plate that has been melted in a glass furnace and then rolled into a flat shape; and it is uncrystallized and can also be referred to as base glass.

S2: placing the double-sided polished flat glass-ceramic precursor plate on a refractory mold, putting it into a heating furnace, performing heat treatment for forming and crystallization, and cooling to obtain the curved glass-ceramic plate.

Herein, the refractory mold is used, which does not deform at high temperatures.

It can be understood that during the heat treatment, the double-sided polished flat glass-ceramic precursor plate is heated and softened, and under the action of gravity, the center of gravity of the glass-ceramic precursor plate continuously descends, finally conforming to the refractory mold to form a curved shape.

Herein, the temperature, time and heating rate of the heat treatment can adopt any parameters commonly used in the technical field, which are not limited in the present invention.

The method for preparing the curved glass-ceramic plate according to the present invention adopts steps of polishing first and then forming and crystallization, which can effectively control the roughness of the inner and outer surfaces of the curved glass-ceramic plate to be ≤ 0.06 µm, and the roughness hardly changes before and after the heat treatment. The low-expansion curved glass-ceramic plate prepared by this method has a smooth and flat surface, good evenness and no scratches on the surface.

The method for preparing the curved glass-ceramic plate according to the present invention adopts polishing first and then forming and crystallization, which can save working hours. In addition, by adopting the method of polishing first, industrial polishing of the flat plate is very easy, with low breakage rate during polishing and high polishing quality.

Meanwhile, the method for preparing the curved glass-ceramic plate according to the present invention is simple, can be formed in one step, and has no subsequent grinding, cutting, polishing and other processes.

In addition, in the present invention, a refractory material is used instead of a traditional metal alloy material to manufacture the mold, and the mold made of the refractory material can be used for a long time without deformation and can be recycled for many times. It solves the problem of "corner warping" easily caused by metal materials in the prior art.

In some optional embodiments, the vertices of the double-sided polished flat glass-ceramic precursor plate are chamfered and/or rounded.

In some optional embodiments, four edges of the double-sided polished flat glass-ceramic precursor plate are trimmed to be chamfers, or rounded corners.

That is, the appearance requirements for the corners and edges of the flat glass-ceramic precursor plate are subjected to corresponding machining processing when preparing the glass-ceramic precursor plate.

In some optional embodiments, in step S1, the method for obtaining the double-sided polished flat glass-ceramic precursor plate includes: S11: calculating the size of the flat glass-ceramic precursor plate corresponding to the curved glass-ceramic plate, wherein the designed size of the flat glass-ceramic precursor plate is larger than the product size of the curved glass-ceramic plate;
S21: performing double-sided polishing on the flat glass-ceramic precursor plate, and cutting the flat glass-ceramic precursor plate to the designed size; and
S23: obtaining the double-sided polished flat glass-ceramic precursor plate.

In S11, the size of the flat glass-ceramic precursor plate corresponding to the curved glass-ceramic plate is calculated, and considering the volume shrinkage during crystallization, the designed size of the flat glass-ceramic precursor plate is slightly larger than the final product size of the curved glass-ceramic plate.

In S21, a flat glass-ceramic precursor plate of a relatively large size is taken, polished on both sides and cut to the designed flat plate size. It can be understood that polishing can be performed first and then cutting, or cutting can be performed first and then polishing. Then the four edges are trimmed so that the ends of the four edges are chamfered or rounded.

In some optional embodiments, the double-sided polished flat glass-ceramic precursor plate is placed horizontally, and the horizontal placement of the double-sided polished flat glass-ceramic precursor plate can be calibrated by a level gauge.

In some optional embodiments, the material of the flat glass-ceramic precursor plate includes LAS glass-ceramic (i.e., a flat LAS glass-ceramic precursor plate), but is not limited thereto. The method for preparing the curved glass-ceramic plate according to the present invention can also be applied to other types of glass-ceramic panels to be prepared into curved shapes.

Herein, the flat LAS glass-ceramic precursor plate, i.e., the uncrystallized base glass, has a glass transition point of about 700°C, whereas after crystallization, the glass-ceramic has a glass transition temperature rising to above 900°C, meaning the softening temperature is also above 900°C; therefore, it is difficult to first crystallize and then bend-form the LAS glass-ceramic.

In some optional embodiments, in step S2, S2 includes:
S21: placing the double-sided polished flat glass-ceramic precursor plate on a refractory mold; and
S22: preheating the double-sided polished flat glass-ceramic precursor plate first, then performing softening and nucleation, and then performing crystallization to obtain the curved glass-ceramic plate.

In some optional embodiments, during the preheating in step S22, the heating rate is 2-30 K/min, and the temperature of the heating furnace is raised from room temperature to the softening temperature Ts of the flat glass-ceramic precursor plate. The heating rate can be as high as possible under the condition of ensuring that the flat glass-ceramic precursor plate and the refractory mold do not crack due to thermal expansion.

In some optional embodiments, during the softening and nucleation in step S22, a curved glass-ceramic precursor plate is formed. Herein, the softening temperature Ts is 20-110°C above the Tg point (glass transition point) temperature, generally 710-820°C, and held for 10-60 minutes. The softening process can be carried out at a constant temperature or with a temperature increase. The total holding time varies depending on the difficulty of forming the glass-ceramic panel. A curved plate with a large central angle is more affected by gravity and can take a short softening time. If the Ts temperature is too low, the glass viscosity is high, the sinking under gravity is slow, it takes too long, and even the bending may not be in place. If the Ts is too high, crystal growth is easily caused, and the crystallinity is increased. The significant effect of increased crystallinity is increased viscosity, and the glass is difficult to soften and deform, which also results in insufficient bending. Insufficient bending herein means that the distance from the lowest point of the outer side of the arc surface of the finally formed glass-ceramic panel to the inner surface of the mold exceeds 1 mm, with an obvious gap visible to the naked eye. The temperature in this step is lower than Tc and higher than Tg, so the softening temperature is generally the same as the nucleation temperature, and nucleation is completed during the softening process. The softening process can achieve good axial evenness, i.e., the curved glass-ceramic precursor plate formed after high-temperature softening can usually conform to the mold closely.

In some optional embodiments, the curved glass-ceramic plate is formed after the crystallization in step S22. During the crystallization, the temperature is further raised to the crystallization temperature Tc at a heating rate of 2-15 K/min. The Tc temperature is generally in the range of Tp point temperature minus 30°C to Tp point temperature plus 100°C, and the Tp temperature is obtained by measuring the thermal effect of the glass-ceramic precursor plate, with detection conducted by conventional detection equipment such as DSC, DTA and the like. The Tc temperature is held for 10-45 minutes to achieve crystal growth in this process. The crystallization temperature range of LAS glass-ceramic is relatively broad; and crystallization occurs not only during the holding stage at Tc, but also during the temperature rise prior to crystallization. Generally, the maximum temperature, which is set at Tp point temperature -30 to +100°C, is called the crystallization temperature Tc, and holding is performed at this temperature. The heating rate can be 1-15 K/min, and the maximum heating rate is limited such that the glass-ceramic and the refractory mold do not crack. The holding time is 10-45 minutes. Too long holding time or too high holding temperature will cause the high quartz crystal phase to transform into the keatite phase, thereby greatly increasing the expansion coefficient; and too short holding time or too low holding temperature will result in insufficient crystallization and failure to meet the low-expansion performance requirements.

In some optional embodiments, the refractory material used in the refractory mold includes at least one of zirconium refractory material, corundum refractory material, magnesia refractory material, calcium-magnesia refractory material and siliceous refractory material.

In some optional embodiments, the thickness of the refractory mold is ≤ 15 mm, including but not limited to a point value of any one of 14 mm, 13 mm, 12 mm, 11 mm, 10 mm, 8 mm, 6 mm, 5 mm, 3 mm and 2 mm, or a range value between any two of 14 mm, 13 mm, 12 mm, 11 mm, 10 mm, 8 mm, 6 mm, 5 mm, 3 mm and 2 mm. Optionally, it is 2-15 mm.

It can be understood that refractory materials have extremely poor thermal conductivity. When refractory materials are made into a refractory mold, if the transverse temperature difference (taking the axial direction of the curved glass-ceramic plate as the transverse direction) is large, during the volume shrinkage in the crystallization process, deformation along the axial direction will be caused, resulting in an arch-shaped bend toward the center of curvature. The inventor found that the thinner the thickness, the smaller the transverse temperature difference of the refractory mold, and the better the evenness of the glass-ceramic panel, especially the axial evenness. However, a refractory mold with a thickness < 2 mm faces great challenges in the mold preparation process, is easy to break during use, and is also easy to break during processing. Therefore, in the present invention, by controlling the thickness of the refractory mold to be less than 15 mm, the refractory mold has good temperature uniformity, and the axial unevenness of the refractory mold and the prepared curved glass-ceramic plate can be controlled. It solves the problem of obvious visual distortion near the curved edge caused by not considering the axial evenness in the prior art.

In some optional embodiments, the maximum thickness of the refractory mold is ≤ 15 mm.

In some optional embodiments, the thickness of the refractory mold is different at different bends, the thickness at the center of the refractory mold is greater than that at both ends, and the center (the bottom end when placed with the opening facing upward) of the refractory mold has the maximum thickness (with reference to FIG. 4), while the thickness at both ends is slightly less than that at the center.

In some optional embodiments, a thin refractory mold is easy to break during mold processing or crystallization use. At this time, an auxiliary method can be adopted, i.e., brackets on both sides are designed outside the refractory mold to reduce the breakage of the refractory mold during mold processing or crystallization use.

In some optional embodiments, the roughness of the inner surface of the refractory mold is 0.05-4.00 µm, including but not limited to, a point value of any one of 0.05 µm, 0.10 µm, 0.20 µm, 0.30 µm, 0.50 µm, 0.80 µm, 1.00 µm, 2.00 µm, 3.00 µm and 4.00 µm, or a range value between any two of 0.05 µm, 0.10 µm, 0.20 µm, 0.30 µm, 0.50 µm, 0.80 µm, 1.00 µm, 2.00 µm, 3.00 µm and 4.00 µm. In the present invention, a polished glass-ceramic precursor plate is used, which is easy to adsorb with the glass phase in the refractory material during crystallization, resulting in surface damage of the glass-ceramic panel. Increasing the roughness of the inner surface of the refractory mold can avoid this problem. However, the roughness of the inner surface of the refractory mold should not be too large; otherwise, small particles on the surface of the refractory mold are easy to fall off during crystallization, thereby forming defects such as pits and white spots on the surface of the glass-ceramic panel.

In some optional embodiments, the central angle θ of the curved glass-ceramic plate is > 114°, including but not limited to a point value of any one of 115°, 116°, 118°, 120°, 130°, 140° and 160°, or a range value between any two of 115°, 116°, 118°, 120°, 130°, 140° and 160°.

In some optional embodiments, the refractory mold is curved in shape. Two edges of the refractory mold in the axial direction are respectively connected with auxiliary side edges (with reference to FIG. 4), and the auxiliary side edges are plate-shaped, and the ends of the auxiliary side edges are connected with the ends of the refractory mold, wherein the refractory mold is fixedly or detachably connected with the two auxiliary side edges. When the refractory mold is placed with its opening facing upward, the included angle α between the auxiliary side edges and the horizontal plane satisfies the following relational expression: α > (21750-2490000/θ)^{1/2}, wherein θ is the central angle of the curved glass-ceramic plate, i.e., the central angle of the curve, in degrees (°). This can ensure that no scratches are generated on the surface of the glass-ceramic precursor plate during the falling process of the glass-ceramic precursor plate.

That is, the auxiliary side edges can be of an integrated structure with the refractory mold, or a separate structure, fixed into a required structure by an external bracket.

In the present invention, a curved glass-ceramic plate with a central angle > 114° can be prepared by arranging auxiliary side edges on both sides of the mold, respectively. It solves the problem that a conventional concave mold is difficult to prepare a curved glass-ceramic plate with a central angle > 114° when the length of the base glass exceeds 2R (R is the curved inner radius of the concave mold).

In some optional embodiments, after double-sided polishing, the roughness of both surfaces (i.e., the upper surface and the lower surface) of the double-sided polished flat glass-ceramic precursor plate is ≤ 0.06 µm.

The outer surface (the contact surface with the refractory mold) and the inner surface of the curved glass-ceramic plate prepared by the present invention have almost the same roughness as the flat glass-ceramic precursor plate. The heat treatment process hardly causes deterioration of roughness.

In a third aspect, the present invention provides use of the curved glass-ceramic plate in the fields of construction and decoration.

Herein, the field of construction includes, but is not limited to, application to glass curtain walls, wall decoration and the like, and the field of decoration includes, but is not limited to, application to indoor home decoration, artwork production, aquariums and fish tanks, courtyard landscapes and the like.

The embodiments of the present invention will be described in detail below with reference to examples, but those skilled in the art will understand that the following examples are only used to illustrate the present invention and should not be regarded as limiting the scope of the present invention. The specific conditions not indicated in the examples shall be carried out in accordance with the conventional conditions or the conditions recommended by the manufacturer. The reagents or instruments used without indicating the manufacturer are conventional products commercially available.

In each example and each comparative example of the present invention, the roughness is measured by a Mitutoyo SJ-210 in accordance with the ISO 1997 method, and λc is set to 2.5.

### Example 1

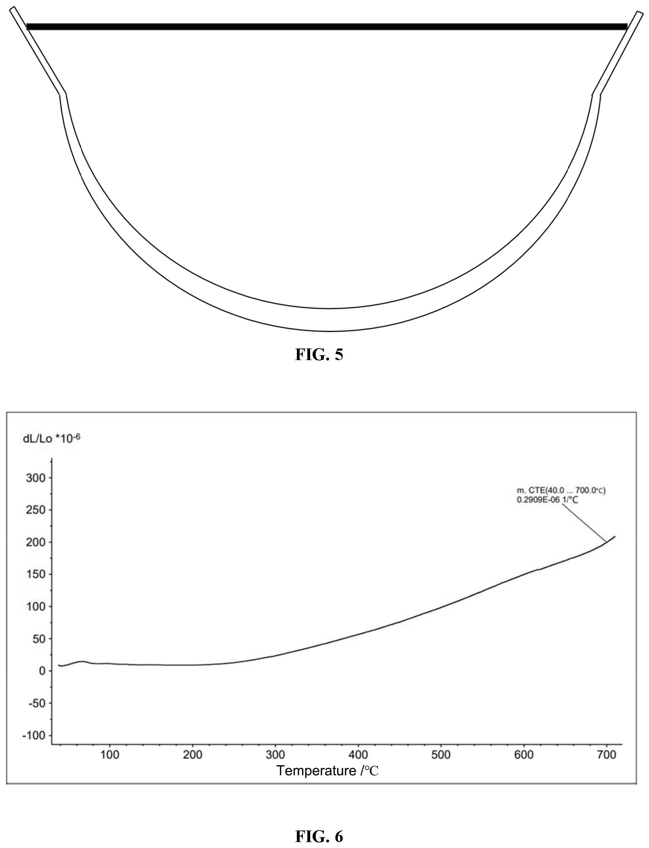

This example provides a curved glass-ceramic panel (i.e., a curved glass-ceramic plate) having a radius of curvature R = 300 mm, a curved sagitta d = 173.2 mm, a length L = 400 mm in the axial direction and a thickness = 4 mm. Its preparation method includes the following steps:
(1) Taking a flat LAS glass-ceramic precursor plate, processing it to a thickness = 4.05 mm, processing both upper and lower surfaces to a roughness of 0.026 µm by double-sided polishing, then cutting it into a rectangle with a size of 696.7 mm × 404 mm, and trimming the four edges to form rounded corners.
(2) Using quartz ceramic refractory material (i.e., siliceous refractory material) to prepare a refractory mold. The refractory mold is curved in shape, with a thickness ≤ 8 mm, the center (the bottom end when placed with its opening facing upward) of the refractory mold has the maximum thickness of 8 mm, and the thickness of other parts is slightly less than 8 mm. The curved radius of the refractory mold is 304 mm, the central angle of the mold is 180°, and the length of the mold in the axial direction is 450 mm, exceeding that of the glass-ceramic precursor plate (the length in the axial direction is 405 mm) by 45 mm. The roughness of the inner surface of the refractory mold is 3.86 µm.
   Two edges of the refractory mold in its axial direction are respectively connected with auxiliary side edges. The auxiliary side edges are flat in shape. The two auxiliary side edges have the same shape and size. The length of the auxiliary side edge is 450 mm, which is the same as that of the refractory mold, and the width of the auxiliary side edge (i.e., the direction extending outward along the opening of the refractory mold) is 90 mm. The refractory mold and the two auxiliary side edges are of an integrated structure fixedly connected. When the refractory mold is placed with its opening facing upward, the included angle α between the auxiliary side edges and the horizontal plane is 55°.
(3) Horizontally placing the double-sided polished flat glass-ceramic precursor plate obtained in step (1) on the refractory mold prepared in step (2), as shown in FIG. 5, putting it into a heating furnace, performing heat treatment for forming and crystallization, and then rapidly cooling to room temperature to obtain the curved glass-ceramic plate, which is curved in shape.

The heat treatment specifically includes: raising the temperature from room temperature to 720°C for preheating, wherein the heating rate is 15 K/min and the heating time is about 46 min. Then raising the temperature to 780°C, the heating time is 30 min and the heating rate is 2 K/min to complete the softening and nucleation process. Then further raising the temperature to 880°C, the heating rate is 5 K/min, the heating time is 20 min, and held at 880°C for 30 min to complete crystallization.

The linear expansion coefficient curve of the curved glass-ceramic panel prepared in this example is shown in FIG. 6. It can be seen that the coefficient of thermal expansion of the curved glass-ceramic panel prepared in Example 1 at 40-700°C is 0.29 ppm/°C.

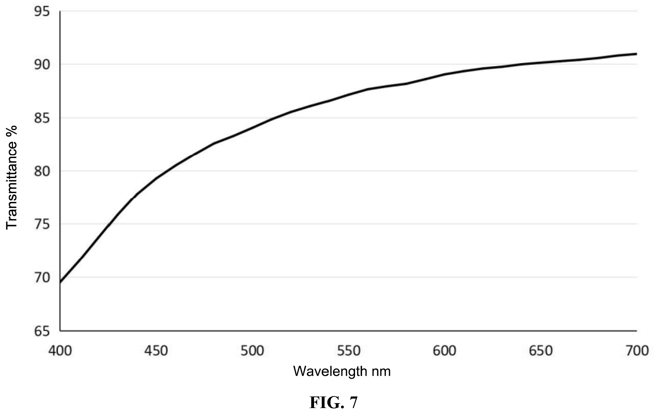

The visible light transmittance curve of the curved glass-ceramic panel prepared in this example is shown in FIG. 7. It can be calculated that the visible light range (400-700 nm) transmittance of the curved glass-ceramic panel prepared in Example 1 is 86.67%. The transmittance is tested according to the method specified in GB/T 2680-1994, using a Hunterlab ColorQuest XE as the testing equipment, with a visible light detection wavelength range of 400-700 nm.

### Example 2-Example 3

The differences between Example 2-Example 3 and Example 1 are shown in Table 1.

### Example 4-Example 6

The differences between Examples 4-6 and Example 1 are shown in Table 2.

### Example 7

The method for preparing the curved glass-ceramic panel according to this example is basically the same as that in Example 1, except that the quartz ceramic refractory material is replaced with corundum ceramic refractory material (i.e., corundum refractory material).

The coefficient of thermal expansion is related to the heat treatment process. The heat treatment processes of Examples 2-7 are the same as that of Example 1, so the coefficients of thermal expansion of the curved glass-ceramic panels prepared in Examples 2-7 at 40-700°C are basically the same as that of the curved glass-ceramic panel in Example 1.

The light transmittance is related to the heat treatment process and surface roughness. The heat treatment processes of Examples 2-7 are the same as that of Example 1, and the surface roughness is basically the same as that of Example 1, so the visible light transmittances of the curved glass-ceramic panels prepared in Examples 2-7 are basically the same as that of the curved glass-ceramic panel in Example 1.

### Comparative Examples 1-2

The differences between Comparative Examples 1-2 and Example 1 are shown in Table 1. The maximum thickness of the mold in Comparative Example 1 is 25 mm. The α in Comparative Example 2 does not satisfy α > (21750-2490000/θ)^{1/2}.

### Comparative Examples 3-4

The differences between Comparative Examples 3-4 and Example 1 are shown in Table 2. Herein, the inner surface roughness Ra of the mold in Comparative Example 3 is 0.031 µm. The inner surface roughness Ra of the mold in Comparative Example 4 is 4.045 µm.

### Comparative Example 5

The method for preparing the curved glass-ceramic panel according to this comparative example is basically the same as that in Example 1, except that in step (2), a curved iron-based mold (without auxiliary side edges) is used instead of a refractory mold.

**Table 1 Differences in Parameters of Groups**

| Group | | Example 1 | Example 2 | Example 3 | Comparative Example 1 | Comparative Example 2 |
|---|---|---|---|---|---|---|
| Maximum thickness of mold/mm | | 8 | 15 | 4 | 25 | 8 |
| Included angle α between auxiliary side edges and horizontal plane | | 55° | 55° | 55° | 55° | 45° |
| Inner surface roughness Ra of mold /µm | | 3.86 | 3.85 | 3.82 | 3.76 | 3.86 |
| Roughness Ra of upper and lower surfaces of glass-ceramic precursor plate /µm | | 0.026 | 0.019 | 0.015 | 0.019 | 0.025 |
| Transverse temperature difference of mold | | 10.3°C | 13°C | 5.1 °C | 27°C | 9.7°C |
| Curved glass-ceramic plate | Whether there are scratches on outer surface | none | none | none | none | Several scratches of about 5 mm at the edges of both straight sides, which are perpendicular to the straight sides |
| | Outer surface roughness Ra/µm | 0.019 | 0.023 | 0.020 | 0.018 | 0.026 |
| | Inner surface roughness Ra/µm | 0.023 | 0.022 | 0.014 | 0.022 | 0.027 |
| | L/mm | 400 | 400 | 400 | 400 | 400 |
| | h/mm | 1.05 | 1.55 | 0.44 | 3.14 | 1.24 |
| | Radial unevenness A | 0.26% | 0.39% | 0.11% | 0.79% | 0.31% |
| | d/mm | 0.95 | 1.45 | 0.35 | 2.70 | 1.05 |
| | Axial unevenness B | 0.24% | 0.36% | 0.09% | 0.68% | 0.26% |
| | Central angle θ | 130° | 130° | 130° | 130° | 130° |
| | (21750-2490000/θ)^{1/2} | 50.95 | 50.95 | 50.95 | 50.95 | 50.95 |

**Table 2 Differences in Parameters of Groups**

| Group | | Example 4 | Example 5 | Example 6 | Example 7 | Comparative Example 3 | Comparative Example 4 | Comparative Example 5 |
|---|---|---|---|---|---|---|---|---|
| Maximum thickness of mold/mm | | 8 | 8 | 8 | 8 | 8 | 8 | 2 |
| Included angle α between auxiliary side edges and horizontal plane | | 55° | 55° | 55° | 55° | 55° | 55° | none |
| Inner surface roughness Ra of mold /µm | | 2.864 | 0.24 | 0.058 | 3.51 | 0.031 | 4.045 | 0.013 |
| Roughness Ra of upper and lower surfaces of glass-ceramic precursor plate /µm | | 0.026 | 0.025 | 0.026 | 0.026 | 0.019 | 0.017 | 0.022 |
| Temperature difference between two ends of mold | | 10.1 °C | 9.8 °C | 9.6 °C | 8.3°C | 9.6°C | 10.4 °C | 3.2°C |
| Curved glass-ceramic plate | Whether there are scratches on outer surface | none | none | none | none | none | none | none |
| | Outer surface roughness Ra/µm | 0.026 | 0.023 | 0.018 | 0.021 | Multiple delaminations | Multiple white spots | 1.321 |
| | Inner surface roughness Ra/µm | 0.023 | 0.022 | 0.021 | 0.020 | Glass-ceramic precursor plate adsorbs to mold, with abnormal forming, | 0.023 | 0.023 |
| | L/mm | 400 | 400 | 400 | 400 | | 400 | 300 |
| | h/mm | 1.03 | 0.98 | 1.02 | 0.81 | | 1.15 | 5.11 |
| | Radial unevenness A | 0.26% | 0.25 % | 0.26 % | 0.20% | | 0.29% | 1.70% |
| | d/mm | 0.90 | 0.85 | 0.85 | 0.75 | not conforming to mold | 1.00 | 0.20 |
| | Axial unevenness B | 0.23% | 0.21 % | 0.21 % | 0.19% | | 0.25% | 0.07% |
| | Central angle θ | 130° | 130° | 130° | 130° | 130° | 130° | 60° |
| | (21750-2490000/θ)^{1/2} | 50.95 | 50.95 | 50.95 | 50.95 | 50.95 | 50.95 | Not applicable |

It can be seen from Table 1 and Table 2 that the curved glass-ceramic plates prepared in each example have smooth and flat surfaces, good evenness, no scratches on the surfaces, a central angle greater than 114° and a low coefficient of thermal expansion.

However, the maximum thickness of the mold in Comparative Example 1 is 25 mm, resulting in a significant increase in radial unevenness and axial unevenness, and high A and B values.

The α in Comparative Example 2 does not satisfy α > (21750-2490000/θ)^{1/2}, resulting in multiple scratches on the surface of the curved glass-ceramic plate.

The inner surface roughness of the mold in Comparative Example 3 is too low, resulting in many delaminations on the outer surface (the contact surface with the mold) of the curved glass-ceramic plate, because the glass-ceramic precursor plate adsorbs to the mold, with abnormal forming and not conforming to the mold.

The inner surface roughness of the mold in Comparative Example 4 is too high, and small particles on the surface of the mold fall off during crystallization, resulting in the formation of many white spot defects on the outer surface of the curved glass-ceramic plate. Such defects must be removed by subsequent mechanical processing, which does not comply with the requirement of the present invention that no subsequent processing is required.

In addition, since an iron-based mold without auxiliary side edges is used in Comparative Example 5, the radial unevenness is significantly increased, and the radial unevenness A is 1.70%. Moreover, the iron-based mold used in Comparative Example 5 generates a large amount of debris due to unavoidable high-temperature oxidation during heating, which exists between the glass-ceramic panel and the mold. Although the debris itself is very easy to fall off from the surface of the glass-ceramic panel, the debris causes small pits all over the contact surface between the glass-ceramic panel and the mold, and the outer surface roughness is significantly increased.

Although the present invention has been illustrated and described with specific embodiments, it should be realized that the above embodiments are only used to illustrate the technical solutions of the present invention, not to limit them. Those of ordinary skill in the art should understand that: the technical solutions described in the foregoing embodiments can be modified, or some or all of the technical features thereof can be equivalently replaced without departing from the spirit and scope of the present invention; and these modifications or replacements do not make the essence of the corresponding technical solutions depart from the scope of the technical solutions of the embodiments of the present invention. Therefore, it is meant that all these replacements and modifications falling within the scope of the appended claims are included therein.

### INDUSTRIAL APPLICABILITY

The present invention provides a curved glass-ceramic plate, a preparation method therefore and use thereof. The curved glass-ceramic plate has a smooth and flat surface, with a roughness Ra of both inner and outer surfaces ≤ 0.06 µm, which can avoid optical scattering and meet visibility requirements, and has good evenness, low radial unevenness and axial unevenness, no "corner warping" phenomenon, and no obvious visual distortion at the curved edges. It solves the problem in the prior art that the curved glass-ceramic panels are difficult to meet the requirements of double-sided roughness ≤ 0.06 µm with poor radial evenness and axial evenness.

## Claims

1. A curved glass-ceramic plate, **characterized in that** a roughness of an inner surface of the curved glass-ceramic plate is ≤ 0.06 µm, and a roughness of an outer surface of the curved glass-ceramic plate is ≤ 0.06 µm;
the curved glass-ceramic plate is curved in shape;
a radial unevenness A of the curved glass-ceramic plate is ≤ 0.4%, wherein A = h/L × 100%; when the curved glass-ceramic plate is placed on a horizontal plane with its opening facing downward, three vertices of the curved glass-ceramic plate are in contact with the horizontal plane, and a distance from the other vertex to the horizontal plane is h; L is a length of the curved glass-ceramic plate in an axial direction; and h and L have a same unit; and
an axial unevenness B of the curved glass-ceramic plate is ≤ 0.4%, wherein B = d/L × 100%; when the curved glass-ceramic plate is placed on a horizontal plane with its opening facing downward, in the axial direction of the curved glass-ceramic plate, a top end of the curved glass-ceramic plate bends downward to form a curved arc, and a maximum distance from the curved arc to a connecting line of midpoints of two curved edges of the curved glass-ceramic plate is d; L is the length of the curved glass-ceramic plate in the axial direction; and d and L have the same unit.

2. The curved glass-ceramic plate according to claim 1, **characterized in that** a coefficient of thermal expansion of the curved glass-ceramic plate at 40-700°C is < 0.5 ppm/°C.

3. A method for preparing the curved glass-ceramic plate according to claim 1 or 2, **characterized by** comprising the following steps:
obtaining a double-sided polished flat glass-ceramic precursor plate; and
placing the double-sided polished flat glass-ceramic precursor plate on a refractory mold, and then performing heat treatment for forming and crystallization to obtain the curved glass-ceramic plate.

4. The method for preparing the curved glass-ceramic plate according to claim 3, **characterized in that** vertices of the double-sided polished flat glass-ceramic precursor plate are chamfered and/or rounded.

5. The method for preparing the curved glass-ceramic plate according to claim 3 or 4, **characterized in that** four edges of the double-sided polished flat glass-ceramic precursor plate are chamfered and/or rounded.

6. The method for preparing the curved glass-ceramic plate according to any one of claims 3-5, **characterized in that** material of the flat glass-ceramic precursor plate comprises LAS glass-ceramic.

7. The method for preparing the curved glass-ceramic plate according to any one of claims 3-6, **characterized in that** refractory material in the refractory mold comprises at least one of zirconium refractory material, corundum refractory material, magnesia refractory material, calcium-magnesia refractory material and siliceous refractory material.

8. The method for preparing the curved glass-ceramic plate according to any one of claims 3-7, **characterized in that** a thickness of the refractory mold is ≤ 15 mm.

9. The method for preparing the curved glass-ceramic plate according to any one of claims 3-8, **characterized in that** the roughness of the inner surface of the refractory mold is 0.05-4.00 µm.

10. The method for preparing the curved glass-ceramic plate according to any one of claims 3-9, **characterized in that** a central angle of the curved glass-ceramic plate is > 114°.

11. The method for preparing the curved glass-ceramic plate according to claim 10, **characterized in that** the refractory mold is curved in shape; two edges of the refractory mold in the axial direction are respectively connected with auxiliary side edges, the auxiliary side edges are flat in shape, the refractory mold is fixedly or detachably connected with the two auxiliary side edges, and when the refractory mold is placed with its opening facing upward, an included angle α between the auxiliary side edges and the horizontal plane satisfies: α > (21750-2490000/θ)^{1/2}, wherein θ is the central angle of the curved glass-ceramic plate in degrees.

12. The method for preparing the curved glass-ceramic plate according to any one of claims 3-11, **characterized in that** the step of placing the double-sided polished flat glass-ceramic precursor plate on a refractory mold and then performing heat treatment for forming and crystallization to obtain the curved glass-ceramic plate specifically comprises:
placing the double-sided polished flat glass-ceramic precursor plate on the refractory mold, and
preheating the double-sided polished flat glass-ceramic precursor plate first, then performing softening and nucleation, and then performing crystallization to obtain the curved glass-ceramic plate.

13. The method for preparing the curved glass-ceramic plate according to any one of claims 3-12, **characterized in that** the step of obtaining a double-sided polished flat glass-ceramic precursor plate specifically comprises:
calculating a size of the flat glass-ceramic precursor plate corresponding to the curved glass-ceramic plate, wherein a designed size of the flat glass-ceramic precursor plate is larger than a product size of the curved glass-ceramic plate; and
performing double-sided polishing on the flat glass-ceramic precursor plate, and cutting the flat glass-ceramic precursor plate to the designed size; and
obtaining the double-sided polished flat glass-ceramic precursor plate.

14. Use of the curved glass-ceramic plate according to claim 1 or 2 in fields of construction and decoration.
